**Europäisches Patentamt**

**European Patent Office**

**Office européen des brevets**

(11) Veröffentlichungsnummer: **0 363 588**
**A2**

(12) # EUROPÄISCHE PATENTANMELDUNG

(21) Anmeldenummer: 89114330.7

(22) Anmeldetag: 03.08.89

(51) Int. Cl.5: **G01P 13/04**

(30) Priorität: 03.09.88 DE 3830010

(43) Veröffentlichungstag der Anmeldung:
**18.04.90 Patentblatt 90/16**

(84) Benannte Vertragsstaaten:
**CH DE ES FR GB IT LI SE**

(71) Anmelder: **ROBERT BOSCH GMBH**
**Postfach 10 60 50**
**D-7000 Stuttgart 10(DE)**

(72) Erfinder: **Wirtz, Rainer, Dipl.-Ing.**
**Talstrasse 21**
**D-7141 Unterriexingen(DE)**
Erfinder: **Schieber, Dieter, Dipl.-Ing.**
**Lerchenstrasse 28**
**D-7101 Untereisesheim(DE)**
Erfinder: **Steffan, Bernhard, Dipl.-Ing.**
**Karlstrasse 38**
**D-7145 Hardthof(DE)**

(54) **Sensor zur Bestimmung des Drehwinkels eines Messobjekts.**

(57) Bei einem Sensor (10) zur Drehzahlbestimmung, der auf dem Prinzip der magnetischen Induktionskopplung beruht, sind auf einem ortsfesten Senderteil (11) eine von Wechselstrom gespeiste Senderspule (30) und auf einem ortsfesten Empfängerteil (12) eine Empfängerschleife aufgebracht. Mit Hilfe des Ventilationsflügels (13) eines Asynchronmotors (14) wird die in der Empfängerschleife induzierte Spannung in periodischer Folge der Zahnköpfe und Zahnlücken verandert. Dadurch erhält man eine proportional zur Drehzahl des Asynchronmotors (14) verlaufende Impulsfolge. Durch eine besondere Ausbildung der Sender- und Empfängerleiterbahnen können Störeinflüsse eliminiert und die Drehrichtung erkannt werden.

FIG. 1

Xerox Copy Centre

## Sensor zur Bestimmung des Drehwinkels eines Meßobjekts

### Stand der Technik

Die Erfindung geht aus von einem Sensor zur Bestimmung der Drehzahl eines Meßobjekts nach der Gattung des Hauptanspruchs. Ein nach diesem Meßprinzip arbeitender Sensor ist aus der DE-OS 30 42 607 bekannt. Dort wird als Geberspur ein zusätzlich, gesondert montiertes Geberrad mit sich abwechselnden elektrisch leitenden und elektrisch nicht leitenden Bereichen verwendet. Dadurch ist aber ein zusätzlicher Platzbedarf und Montageaufwand notwendig.

### Vorteile der Erfindung .

Der erfindungsgemäße Sensor mit den kennzeichnenden Merkmalen des Hauptanspruchs hat demgegenüber den Vorteil, daß der bereits vorhandene Ventilationsflügel gleichzeitig als Geberspur verwendet werden kann. Durch die Doppelfunktion des Ventilationsflügels ist der Platzbedarf gering und es ist kein zusätzlicher Montageaufwand notwendig. Da die Empfänger- und Senderleiterbahnen über ein Segment der Geberspur ausgebildet sind, werden jeweils gleichzeitig mehrere Spurzähne abgegriffen und ausgewertet. Dadurch wirkt sich ein an einem einzelnen Zahn auftretender Fehler nicht störend aus. Ferner ist ein relativ großer Abstand (einige Millimeter) zwischen Geberspur und Empfängerschleife bzw. Senderleiterbahn möglich, so daß die Montage einfach ist und der Sensor eine Unempfindlichkeit gegen Abstandstoleranzen aufweist. Werden zwei um ein Viertel Z, wobei Z der Abstand zwischen zwei Zahnmittelpunkten ist, versetzte, übereinanderliegende Empfängerleiterbahnen verwendet, so ergibt sich eine Verdoppelung der Winkelauflösung, und die Drehrichtung kann erkannt werden. Es können sowohl gedruckte Empfänger- und Senderleiterbahnen miteinander kombiniert werden, als auch gedruckte und gewickelte Spulen.

Durch die in den Unteransprüchen aufgeführten Maßnahmen sind vorteilhafte Weiterbildungen und Verbesserungen der im Hauptanspruch angegebenen Merkmale möglich.

### Zeichnung

Ein Ausführungsbeispiel der Erfindung ist in der Zeichnung dargestellt und in der nachfolgenden Beschreibung näher erläutert. Es zeigen

Figur 1 einen Schnitt durch einen Sensor,
Figur 2 eine Draufsicht auf den Ventilationsflügel,
Figur 3 eine perspektivische Darstellung eines Segments des Ventilationsflügels,
Figur 4 die Senderspule in perspektivischer Darstellung,
Figur 4a einen Schnitt durch den Träger der Senderspule und
Figur 5 eine Empfängerschleife.

### Beschreibung des Ausführungsbeispiels

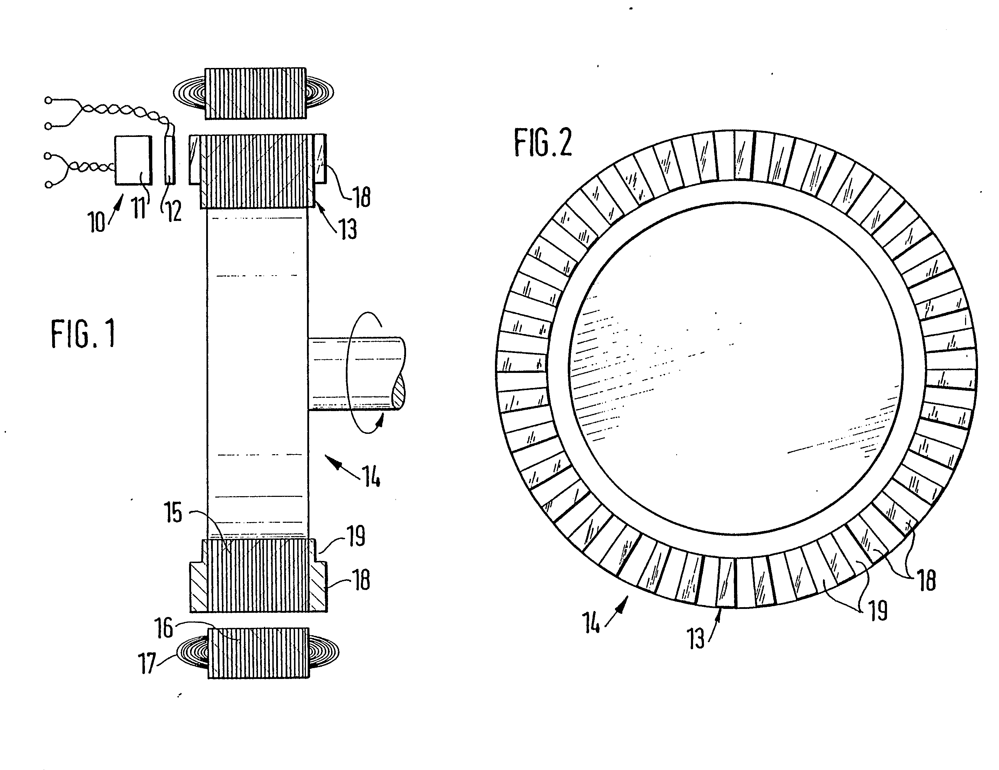

In Figur 1 ist mit 10 ein Sensor bezeichnet, der ein Senderteil 11 und ein Empfängerteil 12 aufweist. Das Senderteil 11 und das Empfängerteil 12 stehen ortsfest und sind dem Ventilationsflügel 13 eines Asynchronmotors 14 mit relativ geringem Abstand zugeordnet, dessen Hauptbauteile, wie z.B. Rotorblechpaket 15 und Ständerblechpaket 16 mit Ständerwicklung 17 schematisch dargestellt sind. Der Ventilationsflügel 13 ist an der Stirnseite des Rotors 15 angegossen und in Figur 2 näher dargestellt. Er ist als Zahnrad ausgebildet, dessen Zähne 18 in axialer Richtung, d.h. zum Empfänger- 12 bzw. zum Senderteil 11 hin ausgerichtet sind. Die Zähne 18 bestehen aus elektrisch leitendem Material, wie z.B. Aluminium oder Kupfer, so daß sich in regelmäßiger Folge elektrisch leitende und weniger elektrisch leitende Bereiche abwechseln, wobei der unterschiedliche elektrische Leitwert der Zähne 18 und des Luftzwischenraums 19 ausgenutzt werden kann.

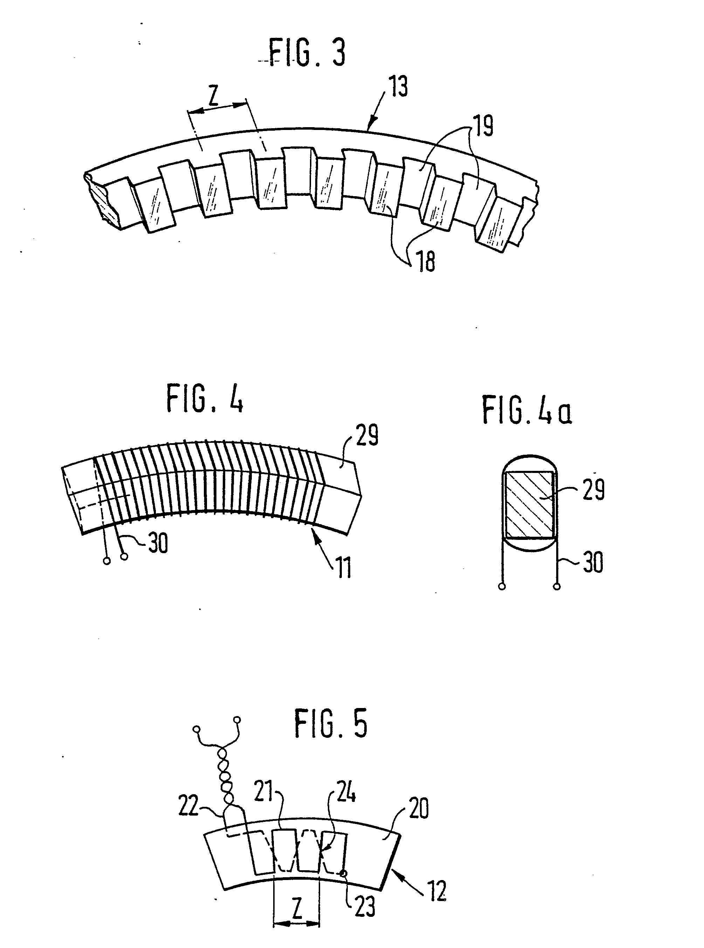

Das Empfängerteil 12 besteht aus einem relativ dünnen, z.B. 0,3 mm dicken Isolierstoffplättchen 20, an dessen beiden parallelen Stirnseiten Leiterbahnen 21, 22 aufgedruckt oder aufgeätzt sind. Mit Hilfe von Durchkontaktierungen 23 sind die Leiterbahnen 21, 22 beider Stirnseiten so verbunden, daß sich eine flache durchgezogene Leiterschleife mit einer Vielzahl von Kreuzungsstellen 24 ergibt. In der Figur 5 ist die sich auf einer Seite befindende Leiterbahn 21 durchgezogen und die auf der anderen Seite befindende Leiterbahn 22 gestrichelt eingezeichnet. Die Krümmung des Ventilationsflügels 13 ist der Krümmung der Geberspur angepaßt. Der Abstand Z zwischen zwei gleichsinnigen Kreuzungsstellen 24 ist gleich dem Abstand zwischen zwei Zahnmittelpunkten des Ventilationsflügels 13.

Das Senderteil 11 besteht aus einem gekrümmten Stab 29 aus Isolierstoff mit rechteckigem Querschnitt. Seine Krümmung ist der des Ventilationsflügels 13 angepaßt. Auf den Stab 29 ist ein isolierter Kupferdraht als Spule dicht beieinanderliegend gewickelt. In Umfangsrichtung gesehen ist die entstehende Senderspule 30 mindestens genauso lang oder länger als die Empfängerschleife. Dadurch ist es möglich, im Randbereich der Senderspule 30 auftretende Unsymmetrien außerhalb des Beeinflussungsbereichs der Empfängerschleife zu verlegen. Die Senderspule 30 liegt getrennt durch eine dünne Isolierschicht auf der Empfängerschleife auf. Die Empfängerschleife ist zur Meßwertbestimmung mit einer nicht dargestellten Demodulator- und Komparatorschaltung verbunden.

Die elektrische Auswertung beruht auf folgendem Effekt: Wenn die Senderspule 30 mit einem Wechselstrom hoher Frequenz (einige hundert Kilohertz) gespeist wird, ergibt sich eine Vielzahl von magnetischen Kopplungen mit der Empfängerschleife.

Wenn man sowohl die Senderspule 30 wie auch die Empfängerschleife, ausgehend von je einem elektrischen Anschluß gedanklich durchläuft, ergeben sich die positiven Kopplungen in den Bereichen, in denen die Leiterbahnen der Empfängerschleife und die dicht anliegenden Drähte der Senderspule 30 parallel liegen und in der gleichen Richtung durchlaufen werden. Die negativen Kopplungen ergeben sich dort, wo die Leiterbahnen der Empfängerschleife und die dichtanliegenden Drähte antiparallel durchlaufen werden. Das heißt, in den Bereichen der Kreuzungen ergeben sich abwechselnd positive und negative Kopplungen. Wenn die Geberspur nicht in der Nähe ist, heben sich wegen der geometrischen Symmetrie die positiven und negativen Kopplungen gegenseitig auf. Ist die Geberspur erfindungsgemäß in der Nähe des Sensors, so wird im Bereich der elektrisch gut leitenden Zähne die Ausbildung der die magnetische Kopplung bewirkenden Flußlinien unterdrückt. Wegen der Ausbildung von Wirbelströmen kann der hochfrequente Wechselfluß nicht in das gut leitende Material der Zähne eindringen. In Abhängigkeit von der relativen Stellung der Geberzähne zu den Kreuzungen der Empfängerschleife werden in der einen Stellung alle positiven und in der anderen alle negativen Teilkopplungen geschwächt.

Bei einer Rotation der Geberspur entsteht dadurch an den Klemmen der Empfängerschleife eine Wechselspannung, die in der Phasenlage relativ zur Senderspannung und in der Amplitude moduliert ist.

Durch geeignete Demodulator- und Komparatorschaltungen, die dem Fachmann bekannt sind, wird ein elektrischer Ausgangsimpuls bei jeder Winkelbewegung des Rotors um den Zahnabstand Z erzeugt.

In einer besonders vorteilhaften Ausgestaltung sind auf dem Träger des Empfängerteils 12 in mehrschichtiger Anordnung zwei übereinanderliegende Empfängerschleifen aufgebracht. Die Kreuzungen der beiden Schleifen sind gegeneinander um ein Viertel Z verschoben. Beide so entstehende Empfängerschleifen sind mit einer eigenen Auswerteschaltung verbunden und werden getrennt demoduliert. Dadurch erhält man zwei Pulszüge, die um ein Viertel Z versetzte Flanken haben. Man kann deshalb von einem Sinus- und einem Cosinussystem sprechen. Dadurch erhält man eine Verdoppelung der Winkelauflösung, und die Drehrichtung des Ventilationsflügels 13 kann erkannt werden.

## Ansprüche

1. Sensor (10) zur Bestimmung des Drehwinkels eines Meßobjekts (14), beruhend auf dem magnetischen Induktionskopplungseffekt mit mindestens zwei Sensorteilen (11, 12) und mit einer relativ zu den Sensorteilen bewegten Geberspur, die abwechselnd elektrisch leitende und weniger elektrisch leitende Bereiche aufweist, wobei ein erstes, als Sender dienendes Sensorteil (11) eine elektrische Leiteranordnung aufweist und wobei ein anderes Sensorteil (12) als Empfänger eine zweite Pole bildende Leiteranordnung trägt, deren nebeneinander angeordnete Leiter elektrisch miteinander gekoppelt sind und parallel zu denen der ersten Leiteranordnung verlaufen, wobei die Leiter der einen Leiteranordnung solche der anderen Leiteranordnung wenigstens teilweise überdecken, dadurch gekennzeichnet, daß als Geberspur der Ventilationsflügel (13) des Meßobjekts (14) dient.

2. Sensor nach Anspruch 1, dadurch gekennzeichnet, daß der Ventilationsflügel (13) zahnradähnlich ausgebildet ist und die Zähne (18) den Geberteilen (11, 12) zugewandt sind.

3. Sensor nach Anspruch 2, dadurch gekennzeichnet, daß die Zähne (18) des Zahnrads aus einem elektrisch leitenden Material hergestellt sind.

4. Sensor nach einem der Ansprüche 1 bis 3, dadurch gekennzeichnet, daß die Geberspur und die zugewandte Stirnseite des Empfängerteils (12) parallel angeordnet sind.

5. Sensor nach einem der Ansprüche 1 bis 4, dadurch gekennzeichnet, daß das Meßobjekt ein Asynchronmotor (14) mit Kurzschlußläufer ist.

6. Sensor nach einem der Ansprüche 1 bis 5, dadurch gekennzeichnet, daß die Leiterbahnen des Empfängerteils (12) und des Senderteils (11) über ein Segment des Ventilationsflügels (13) ausgebildet sind.

7. Sensor nach einem der Ansprüche 1 bis 6, dadurch gekennzeichnet, daß in Umfangsrichtung gesehen die Leiterbahnen des Senderteils (11) länger sind als die Leiterbahnen des Empfängerteils (12).

8. Sensor nach einem der Ansprüche 1 bis 7, dadurch gekennzeichnet, daß die Leiterbahnen des Senderteils (11) aus Draht bestehen und auf einem Träger aufgewickelt sind.

9. Sensor nach einem der Ansprüche 1 bis 8, dadurch gekennzeichnet, daß das Senderteil (11) räumliche Struktur aufweist und die der Geberspur (12) zugewandte Stirnseite parallel zur Geberspur ausgebildet ist.

10. Sensor nach einem der Ansprüche 1 bis 9, dadurch gekennzeichnet, daß das Empfängerteil (12) gedruckte Leiterbahnen aufweist.

11. Sensor nach einem der Ansprüche 1 bis 10, dadurch gekennzeichnet, daß die auf den Stirnseiten des Empfängerteils (12) aufgebrachten Leiterbahnen sich im Abstand von ein Halb Z kreuzen und so Doppelschleifen mit der Länge Z bilden, wobei Z der Zahnmittenabstand des Ventilationsflügels (13) ist.

12. Sensor nach einem der Ansprüche 1 bis 11, dadurch gekennzeichnet, daß auf dem Empfängerteil (12) eine vielschichtige Leiterbahn mit zwei übereinanderliegenden Empfängerschleifen aufgebracht ist, und die Kreuzungen der übereinanderliegenden Empfängerschleifen um ein Viertel Z verschoben sind.

13. Sensor nach einem der Ansprüche 1 bis 11, dadurch gekennzeichnet, daß die Senderspule (30) mit einem Wechselstrom hoher Frequenz gespeist wird.

FIG. 1

FIG.2

10
11
12
18
13
15
19
18
16
17
14

14
13
19
18

EP 0 363 588 A2

22070

## FIG. 3

## FIG. 4

## FIG. 4a

## FIG. 5